## Europäisches Patentamt
## European Patent Office
## Office européen des brevets

(19)

(11) Veröffentlichungsnummer: **0 242 701**
**B1**

(12) **EUROPÄISCHE PATENTSCHRIFT**

(45) Veröffentlichungstag der Patentschrift: **19.09.90**

(51) Int. Cl.⁵: **A 47 G 23/04,** B 65 D 81/34, H 05 B 6/64

(21) Anmeldenummer: **87105168.6**

(22) Anmeldetag: **08.04.87**

(54) **Aus Kunststoff gefertigtes schalenförmiges Geschirrteil für Mikrowellenherde.**

(30) Priorität: **19.04.86 DE 3613298**

(43) Veröffentlichungstag der Anmeldung:
**28.10.87 Patentblatt 87/44**

(45) Bekanntmachung des Hinweises auf die
Patenterteilung:
**19.09.90 Patentblatt 90/38**

(84) Benannte Vertragsstaaten:
**AT BE CH ES FR GB IT LI LU NL SE**

(56) Entgegenhaltungen:
**EP-A-0 169 780**
**FR-A-2 447 174**
**US-A-2 928 567**
**US-A-4 081 646**
**US-A-4 533 061**
**US-A-4 549 672**

(73) Patentinhaber: **Melitta-Werke Bentz & Sohn**
**Ringstrasse 99**
**D-4950 Minden 1 (DE)**

(72) Erfinder: **Desai, Manohar Palsule**
**In den Bärenkämpen 40**
**D-4950 Minden (DE)**

(74) Vertreter: **Stracke, Alexander, Dipl.-Ing. et al**
**Jöllenbecker Strasse 164**
**D-4800 Bielefeld 1 (DE)**

Courier Press, Leamington Spa, England.

**Beschreibung**

Die vorliegende Erfindung bezieht sich auf ein aus Kunststoff gefertigtes, schalenförmiges Mikrowellenherd-Geschirrteil, beispielsweise in Form einer Schüssel, eines Menütellers o.dgl.

Mikrowellenherde erfreuen sich insbesondere im Haushaltsbereich zunehmender Beliebtheit, insbesondere deshalb, weil in Mikrowellenherden Speisen in kürzester Zeit gegart oder aufgetaut und bei Bedarf erhitzt werden können.

Entsprechend besteht ein zunehmender Bedarf an geeignetem Geschirr für Mikrowellenherde.

Grundsätzlich sind zwei Geschirrarten für Mikrowellenherde bekannt.

Einerseits gibt es einfache, aus Kunststoff gefertigte und äußerst dünnwandige Mikrowellenherd-Geschirrteile, die als Einwegverpackungen benutzt werden. Ein derartiges Mikrowellenherd-Geschirrteil ist beispielsweise aus der US-A-40 81 646 bekannt. In derartigen Mikrowellenherd-Geschirrteilen werden meist komplett vorbereitete und vorgegarte Speisen über den Handel angeboten und vom Endverbraucher in dem betreffenden Mikrowellenherd-Geschirrteil im Mikrowellenherd lediglich erhitzt. Nach dem Verzehr der Speisen wird dieses Mikrowellenherd-Geschirrteil weggeworfen.

Für die dauernde Benutzung im Mikrowellenherd sind Geschirrteiles aus Kunststoff bekannt, die verhältnismäßig massiv und demzufolge auch entsprechend stabil sind. Derartige Geschirrteile werden meist im Spritzgießverfahren hergestellt oder aus entsprechend hochwertigem Kunststoff gepreßt.

Die letztgenannte Kategorie von entsprechendem Geschirr ist vergleichsweise teuer, was einerseits daran liegt, daß der zum Einsatz kommende Kunststoff relativ hochwertig und demzufolge sehr teuer ist und andererseits auch damit zusammenhängt, daß die Herstellung derartigen Geschirres in entsprechenden Formen recht zeit- und damit auch kostenaufwendig ist.

Der vorliegenden Erfindung liegt die Aufgabe zugrunde, ein Mikrowellenherd-Geschirrteil der gattungsgemäßen Art zu schaffen, welches bei geringstem Materialeinsatz und insgesamt geringen Herstellkosten eine Steifigkeit und Stabilität aufweist, die eine Dauerverwendung ohne weiteres gestattet.

Diese Aufgabe wird bei einem gattungsgemäßen Mikrowellenherd-Geschirrteil erfindungsgemäß gelöst durch einen zweiteiligen Aufbau aus einer Innenschale und einer Außenschale, wobei Innen- und Außenschale jeweils einstückig hergestellt und unter Lufteinschluß mit Abstand zueinander angeordnet und im Bereich von umlaufenden und seitlich vorstehenden Randstegen miteinander verschweißt oder verklebt sind.

Durch den zweiteiligen Aufbau des Mikrowellenherd-Geschirrteiles und die feste Verbindung der beiden Schalen im Bereich von ohnehin stabilisierenden Randstegen wird bei geringstem Materialeinsatz ein Höchstmaß an Steifigkeit und Festigkeit erreicht, so daß ein derartiges Mikrowellenherd-Geschirrteil ohne weiteres einer Dauerverwendung im Haushalt gewachsen ist. Aufgrund des geringen Materialeinsatzes ist das Mikrowellenherd-Geschirrteil selbst vergleichsweise kostengünstig und bietet darüber hinaus noch eine Reihe von Vorteilen, die aufgrund seines zweischaligen Aufbaues erzielt werden.

So besteht einer dieser Vorteile darin, daß zur Erwärmung von Speisen in einem derartigen Mikrowellenherd-Geschirrteil weniger Energie benötigt wird als bislang, da die zwischen Innen- und Außenschale eingeschlossene Luft als Isolierschicht wirkt. Der gleiche Isoliereffekt bringt den weiteren Vorteil mitsich, daß erwärmte Speisen länger warmgehalten werden können.

Aufgrund des zweiteiligen Aufbaues bestehen auch hinsichtlich der reinen Formgestaltung erheblich mehr Möglichkeiten als dies bislang der Fall war, da Innen- und Außenschale weitestgehend unabhängig voneinander gestaltet werden können. Es ist lediglich dafür zu sorgen, daß Innen- und Außenschale im Bereich ihrer Randstege praktisch formgleich sind, um hier eine dichte und feste Verbindung erzielen zu können.

Innen- und Außenschale können auch ohne weiteres farblich unterschiedlich gestaltet sein.

Aufgrund der schon angesprochenen Steifigkeit und Festigkeit ist ein derartiges Mikrowellenherd-Geschirrteil auch ohne weiteres spülmaschinenfest und entspricht somit allen Anforderungen, die an modernes Geschirr im Haushalt gestellt werden.

Ein aus Kunststoff gefertigtes Geschirrteil mit einem zweiteiligen Aufbau ist zwar bereits aus der US-A-29 28 567 bekannt, hier handelt es sich allerdings nicht um ein Mikrowellenherd-Geschirrteil, sondern um ein Geschirrteil, bei dem es ausschließlich darum geht, Speisen warmzuhalten. Zu diesem Zweck ist bei dem Geschirrteil nach der US-A-29 28 567 im Bereich der Innenschale eine Einfüllöffnung zum Einfüllen von heißem Wasser vorgesehen. Diese Einfüllöffnung kann dann durch einen Stopfen verschlossen werden.

Vorteilhaften Ausbildungen der Erfindung sind Gegenstand der abhängigen Ansprüche 2 bis 14.

In den beigefügten Zeichnungen sind Ausführungsbeispiele der Erfindung dargestellt, die im folgenden näher beschrieben werden.

Im einzelnen zeigen:

Fig. 1 eine perspektivische Darstellung eines Mikrowellenherd-Geschirrteiles in Form einer Schüssel

Fig. 2 eine Ansicht des Mikrowellenherd-Geschirrteiles in Richtung des Pfeiles II in Fig. 1

Fig. 3 einen stark vergrößert dargestellten Längsschnitt durch das Mikrowellenherd-Geschirrteil gemäß Fig. 1 und 2 im Bodenbereich

Fig. 4 einen Teilschnitt durch das Mikrowellenherd Geschirrteil gemäß den Fig. 1 und 2 im Randbereich

Fig. 5 einen der Fig. 4 entsprechenden Teilschnitt bei einem Mikrowellenherd-Geschirrteil mit aufgesetztem Deckel nach einem weiteren Ausführungsbeispiel der Erfindung

Fig. 6 u.

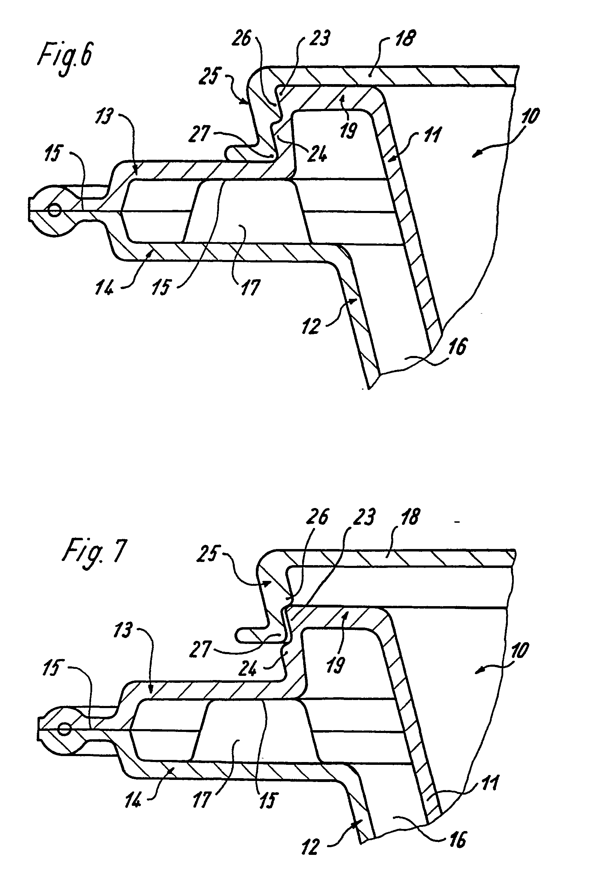

Fig. 7 der Fig. 5 entsprechende Teilschnitte durch ein weiteres Mikrowellenherd-Geschirrteil mit Deckel

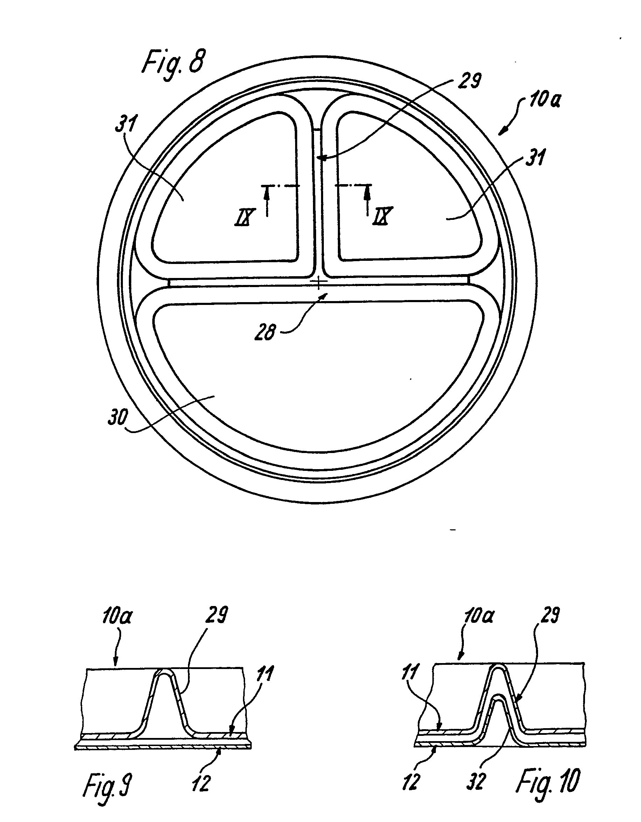

Fig. 8 eine Draufsicht auf ein Mikrowellenherd-Geschirrteil nach einem weiteren Ausführungsbeispiel der Erfindung

Fig. 9 einen Teilschnitt nach der Linie IX-IX in Fig. 8

Fig. 10 einen der Fig. 9 entsprechenden Teilschnitt einen Mikrowellenherd-Geschirrteil nach einem weiteren Ausführungsbeispiel der Erfindung.

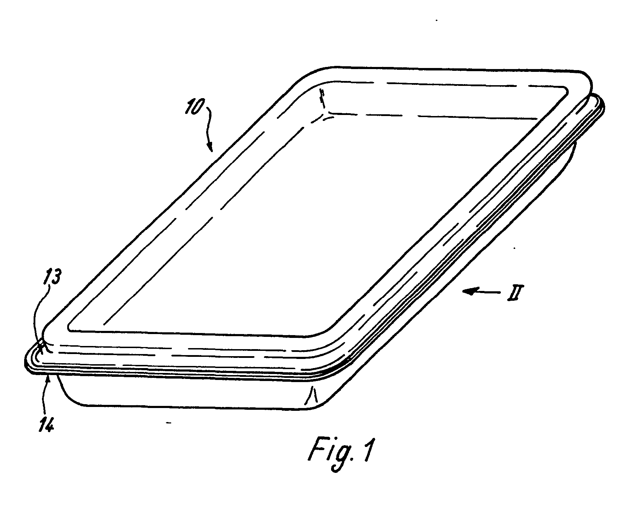

Das in den Fig. 1 bis 4 gezeigte Ausführungsbeispiel an der Erfindung zeigt ein Mikrowellenherd-Geschirrteil, welches ingesamt mit dem Bezugszeichen 10 versehen ist.

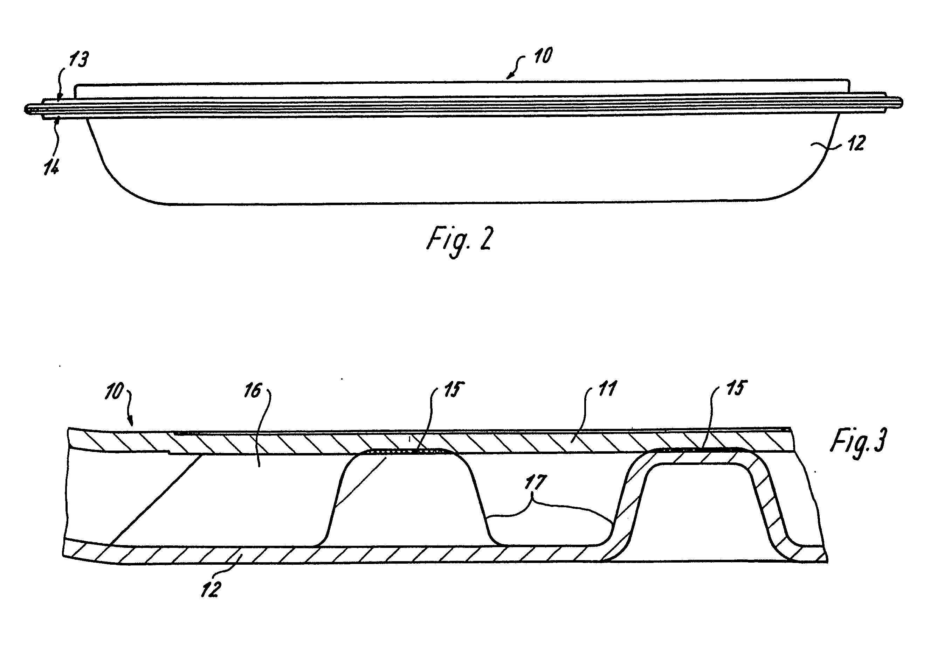

Das Mikrowellenherd-Geschirrteil 10 ist insgesamt aus Kunststoff gefertigt und schalenförmig gestaltet und weist insgesamt die Form einer Schüssel auf, was die Fig. 1 und 2 deutlich machen.

Es sei allerdings an dieser Stelle schon darauf hingewiesen, daß der Erfindungsgedanke nicht gebunden ist an die Form des Mikrowellenherd-Geschirrteiles selbst. Darauf wird im Zusammenhang mit dem Ausführungsbeispiel gemäß Fig. 8 noch näher eingegangen.

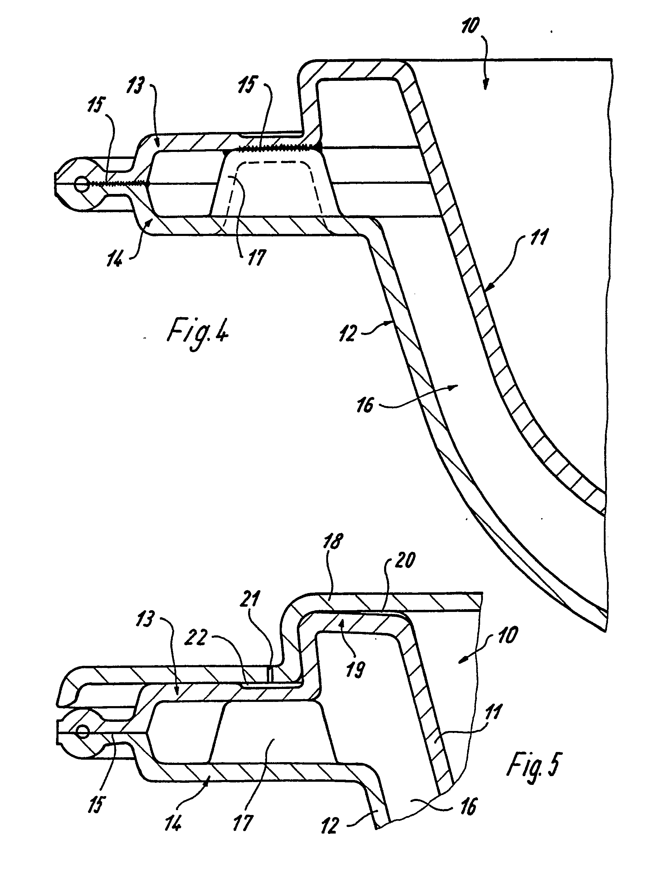

Wie insbesondere die Fig. 3 und 4 deutlich machen, besteht das Mikrowellenherd-Geschirrteil 10 aus einer Innenschale 11 und einer Außenschale 12. Wie deutlich erkennbar ist, sind sowohl die Innenschale 11 wie auch die Außenschale 12 im oberen Bereich des Mikrowellenherd-Geschirrteiles 10 mit umlaufenden und seitlich vorstehenden Randstegen 13 bzw. 14 versehen. Im Bereich dieser umlaufenden Randstege 13 bzw. 14 sind Innenschale 11 und Außenschale 12 fest miteinander verbunden, und zwar vorzugsweise durch eine mit dem Bezugszeichen 15 versehene Verschweißung. Alternativ hierzu könnten Innenschale 11 und Außenschale 12 allerdings auch durch einen geeigneten Kleber miteinander verklebt sein.

Ansonsten weisen Innenschale 11 und Außenschale 12 einen Abstand zueinander auf, so daß zwischen den beiden Schalen 11 und 12 ein Zwischenraum 16 gebildet ist, der mit Luft ausgefüllt ist.

Sowohl die Innenschale 11 wie auch die Außenschale 12 sind jeweils als einstückige, tiefgezogene Kunststoffteile ausgebildet.

Je nach Größe der Gesamtgrundfläche des Mikrowellenherd-Geschirrteiles 10 kann zur Erhöhung der Gesamtsteifigkeit und der Gesamtstabilität die Anordnung von Stütznocken 17 sinnvoll sein, die in die Außenschale 12 eingezogen sind und sich bis zur Innenschale 11 erstrekken und im Berührungsbereich zur Innenschale 11 mit dieser wiederum durch eine Verschweißung fest verbunden sind. Durch diese Stütznocken 17 kann die Gesamtfestigkeit des Mikrowellenherd-Gechirrteiles 10 trotz geringsten Materialeinsatzes und damit einhergehender geringer Wandstärke für Innenschale 11 und Außenschale 12 beträchtlich erhöht werden.

Der zwischen der Innenschale 11 und der Außenschale 12 vorhandene und mit Luft gefüllte Zwischenraum 16 dient als Isolierschicht, die einerseits dazu führt, daß in einem derartigen Mikrowellenherd-Geschirrteil 10 befindliche Speise in einem Mikrowellenherd vergleichsweise rasch erwärmt werden kann, da Wärmeverluste durch die Wandungen des Mikrowellenherd-Gechirrteiles 10 relativ gering sind und andererseits aufgrund des Isoliereffektes auch noch den positiven Effekt mit sich bringt, daß die erwärmte Speise relativ lange warmgehalten wird.

In Fig. 5 ist ein Ausführungsbeispiel der Erfindung gezeigt, bei dem das Mikrowellenherd-Geschirrteil 10 wiederum die Form einer Schüssel aufweist. Auch hier ist die Innenschale 11 mit einem umlaufenden, vorstehenden Randsteg 13 und die Außenschale mit einem korrespondierenden Randsteg 14 versehen. Beide Randstege 13 und 14 sind wiederum miteinander verschweißt. Auch hier können Stütznocken 17 zur Erhöhung der Gesamtstabilität vorgesehen sein.

Das Mikrowellenherd-Geschirrteil 10 ist beim Ausführungsbeispiel gemäß Fig. 5 mittels eines ebenfalls aus Kunststoff gefertigten Deckels 18 verschließbar. Der obere Auflagerand 19 des Mikrowellenherd-Geschirrteiles 10 ist außenseitig zur Bodenseite des Mikrowellenherd-Geschirrteiles 10 hin gesehen konisch verjüngt, entsprechend ist die Form des Deckels 18 gewählt. Durch diese Konstruktion wird ein ansich wünschenswerter, luftdichter Abschluß des Mikrowellenherd-Geschirrteiles 10 mittels des Deckels 18 erreicht.

Soll nun im verschlossenen Mikrowellenherd-Geschirrteil 10 eine darin befindliche Speise im Mikrowellenherd erhitzt werden, so ist es erforderlich, daß Luft aus dem Mikrowellenherd-Geschirrteil 10 entweichen kann.

Dies ist beim Ausführungsbeispiel gemäß Fig. 5 dadurch erreicht worden, daß eine Art "Überdruckventil" einerseits in den Auflagerand 19 des Mikrowellenherd-Geschirrteiles 10 und andererseits in den Deckel 18 integriert worden ist. Wie Fig. 5 deutlich macht, ist das Mikrowellenherd-Geschirrteil 10 im Bereich seines Auflagerandes 19 partiell mit einer sich zum Inneren des Mikrowellenherd-Geschirrteiles 10 hin erweiternden Mulde 20 und der Deckel 18 mit einer Entlüftungsbohrung 21 versehen. Die Entlüftungsbohrung 21 mündet bei aufgesetztem Deckel 18 in eine Vertiefung 22 des Randsteges 13 der Innenschale 11.

Bildet sich nun bei der Erwärmung einer Speise im Inneren des durch den Deckel 18 verschlossenen Mikrowellenherd-Geschirrteiles 10 ein gewisser Überdruck, so wird dieser durch die Mulde 20, die Vertiefung 22 und die Entlüftungsbohrung 21 entweichen können, bedingt durch die Elastizität des Auflagerandes 19 und/oder des Deckels 18.

Bei dem in den Fig. 6 und 7 gezeigten Ausführungsbeispiel des Erfindung ist der obere Auflagerand 19 des Mikrowellenherd-Geschirrteiles 10 außenseitig mit zwei gegeneinander versetzten Stufen 23 und 24 versehen. Ein Deckel 18 ist im Bereich seines Schließrandes 25 innenseitig mit entsprechend abgesetzten Vorsprüngen 26 und 27 ausgestattet.

Ist der Deckel 18, wie in Fig. 6 gezeigt, vollständig auf den Auflagerand 19 des Mikrowellenherd-Geschirrteiles 10 aufgedrückt, so ergibt sich ein luftdichter Abschluß des Innenraumes des Mikrowellenherd-Geschirrteiles 10. Wird hingegen der Deckel 18 im Bereich der ersten Stufe 23 auf den Auflagerand 19 des Mikrowellenherd-Geschirrteiles 10 aufgesetzt, wie in Fig. 7 dargestellt, so ergibt sich ein luftdurchlässiger Verschluß des Mikrowellenherd-Geschirrteiles 10. Dies bedeutet, daß in dieser einstufig gerasteten Schließstellung im Mikrowellenherd-Geschirrteil 10 befindliche Speisen im Mikrowellenherd erhitzt werden können, ohne daß es zu einem unerwünschten Überdruck im Inneren des Mikrowellenherd-Geschirrteiles 10 kommen kann.

Die in Fig. 6 gezeigte, luftdichte Schließstellung für das Mikrowellenherd-Geschirrteil 10 ist beim Einfrieren von Speisen wünschenswert.

In Fig. 8 ist ein Mikrowellenherd-Geschirrteil 10 für einen Mikrowellenherd gezeigt, welches in Abweichung von den bisher dargestellten Formen als Menüteller ausgebildet ist. Dieses Mikrowellenherd-Geschirrteil 10a weist eine kreisrunde Grundform auf und ist in seinem schalenförmigen Inneren mit Trennstegen 28 bzw. 29 versehen. Durch diese Trennstege 28 und 29 werden innerhalb des Menütellers verschiedene Fächer 30 bzw. 31 abgetrennt.

Wie nun Fig. 9 deutlich macht, können die Trennstege 28 oder 29 ausschließlich im Bereich der Innenschale vorgesehen sein, es besteht aber auch die Möglichkeit, die jeweilige Außenschale des Mikrowellenherd-Geschirrteiles 10a im Bereich der Trennstege 28 oder 29 mit entsprechendes Einziehungen 32 zu versehen, was Fig. 10 deutlich macht. Zusätzlich besteht die Möglichkeit, in dem Bereich zwischen den Trennstegen 28 oder 29 und entsprechenden Einziehungen 32 der Außenschale 12 Stütznocken 17 vorzusehen und diese mit der Innenschale 11 durch Verschweißen zu verbinden.

Die vorstehenden Ausführungen machen deutlich, daß der erfindungsgemäße Aufbau eines erfindungsgemäßen Mikrowellenherd-Geschirrteiles 10 oder 10a aus zwei Schalen vielfältige Gestaltungsmöglichkeiten mit sich bringt, die einerseits der Erhöhung der Eigensteifigkeit, der Stabilität und der Festigkeit des Mikrowellenherd-Geschirrteiles 10 oder 10a selbst dienen können und die andererseits aber auch die Möglichkeit eröffnen, ein derartiges Mikrowellenherd-Geschirrteil 10 oder 10a hinsichtlich der reinen Formgestaltung äußerst vielseitig beeinflussen zu können.

So kann beispielsweise die Innenschale 11 durchaus einen anderen Konturenverlauf aufweisen wie die Außenschale 12, lediglich im Bereich der miteinander zu verbindenden Randstege 13 und 14 müssen Innenschale 11 und Außenschale 12 kongruent sein. Ebenso besteht die Möglichkeit, die Innenschale 11 gegenüber der Außenschale 12 farblich abweichend zu gestalten.

Bei aller Stabilität des gesamten Mikrowellenherd-Geschirrteiles 10 oder 10a behält die Innenschale 11 ebenso wie die Außenschale 12 in sich gesehen eine gewisse Elastizität, so daß ohne weiteres die Möglichkeit besteht, in ein derartiges Mikrowellenherd-Geschirrteil 10 oder 10a eine Metallplatte od.dgl. einzuklemmen, die bei Benutzung in einem Mikrowellenherd der Erzielung eines Bräunungseffektes für Fleischspeisen od.dgl. dient.

Die Innenschale 11 und die Außenschale 12 Können jeweils auch einstückig als Spritzgießteile hergestellt sein, wobei zur Beibehaltung der schon mehrfach erwähnten Vorteile darauf zu achten ist, daß diese Spritzgießteile verhältnismäßig dünnwandig sind.

Die in den Fig. 5 bis 7 gezeigten Deckel 18 können selbstverständlich ebenso wie die Mikrowellenherd-Geschirrteile 10 einen zweischaligen Aufbau aufweisen, so daß der angegebene Isoliereffekt auch für die jeweiligen Deckel 18 gilt.

Die in Fig. 5 dargestellte Vertiefung 22 des Randsteges 13 verläuft vorzugsweise über den gesamten Randsteg 13 um, was den Vorteil mit sich bringt, daß unabhängig davon, in welcher Lage der Deckel 18 aufgetzt wird, die Entlüftungsbohrung 21 immer in die umlaufende Vertiefung 22 einmündet. Dies bedeutet, daß beim Aufsetzen des Deckels nicht darauf geachtet werden muß, an welcher Stelle sich die Vertiefung 22 befindet.

**Patentansprüche**

1. Aus Kunststoff gefertigtes, schalenförmiges Mikrowellenherd-Geschirrteil, beispielsweise in Form einer Schüssel, eines Menütellers o.dgl., gekennzeichnet durch einen zweiteiligen Aufbau aus einer Innenschale (11) und einer Außenschale (12), wobei Innen- und Außenschale (11, 12) jeweils einstückig hergestellt und unter Lufteinschluß mit Abstand zueinander angeordnet und im Bereich von umlaufenden seitlich vorstehenden Randstegen (13, 14) miteinander verschweißt oder verklebt sind.

2. Mikrowellenherd-Geschirrteil nach Anspruch 1, dadurch gekennzeichnet, daß die Innenschale (11) oder die Außenschale (12) innerhalb des von den miteinander verbundenen Randstegen (13, 14) begrenzten Bereiches mit mindestens einem an der jeweils anderen Schale anliegenden und mit dieser verschweißten oder verklebten Stütznocken (17) versehen ist.

3. Mikrowellenherd-Geschirrteil nach Anspruch 1 oder 2, dadurch gekennzeichnet, daß die Innenschale (11) und die Außenschale (12) jeweils aus einstückig hergestellten Tiefziehteilen bestehen.

4. Mikrowellenherd-Geschirrteil nach einem oder mehreren der Ansprüche 1 bis 3, dadurch gekennzeichnet, daß die Innenschale (11) mit einem oder mehreren, den Innenraum des Geschirrteiles (10a) in verschiedene Fächer (30, 31) unterteilenden Trennstegen (28, 29) versehen ist.

5. Mikrowellenherd-Geschirrteil nach Anspruch 4, dadurch gekennzeichnet, daß die Außenschale (12) im Bereich der Trennstege (28, 29) mit entsprechenden Einziehungen (32) versehen ist.

6. Mikrowellenherd-Geschirrteil nach einem oder mehreren der Ansprüche 1 bis 5 mit einem Deckel (18), dadurch gekennzeichnet, daß der Deckel (18) einstückig aus Kunststoff hergestellt und luftdicht auf einen oberen Auflagerand (19) des Geschirrteiles (10, 10a) aufsetzbar ist.

7. Mikrowellenherd-Geschirrteil nach Anspruch 6, dadurch gekennzeichnet, daß der obere Auflagerand (19) des Geschirrteiles (10, 10a) partiell mit einer zur Innenseite des Geschirrteiles (10, 10a) hin sich erweiternden Mulde (20) und der Deckel (18) mit einer Entlüftungsbohrung (21) versehen ist, die in eine Vertiefung (22) des Randsteges (13) einmündet.

8. Mikrowellenherd-Geschirrteil nach Anspruch 6, dadurch gekennzeichnet, daß der Auflagerand (19) des Geschirrteiles (10, 10a) außenseitig mit zwei gegeneinander versetzten Stufen (23, 24) und der Schließrand (26, 27) versehen ist, wobei der Eingriff beider Vorsprünge (26, 27) in die Stufen (23, 24) einen luftdichten Abschluß des Geschirrteiles (10, 10a) und der Eingriff lediglich eines Vorsprunges (27) in eine Stufen (23) einen luftdurchlässigen Abschluß des Geschirrteiles (10, 10a) bewirkt.

9. Mikrowellenherd-Geschirrteil nach einem oder mehreren der Ansprüche 1, 2 oder 4 bis 8, dadurch gekennzeichnet, daß die Innenschale (11) und die Außenschale (12) jeweils einstückig aus dünnwandigen Spritzgießteilen bestehen.

10. Mikrowellenherd-Geschirrteil nach einem oder mehreren der vorhergehenden Ansprüche mit einem Deckel (18), dadurch gekennzeichnet, daß der Deckel (18) einen zweischaligen Aufbau aufweist, wobei Innen- und Außenschale unter Lufteinschluß mit Abstand zueinander angeordnet und im Bereich von umlaufenden und seitlich vorstehenden Randstegen miteinander verschweißt oder verklebt sind.

11. Mikrowellenherd-Geschirrteil nach Anspruch 10, dadurch gekennzeichnet, daß der Deckel luftdicht auf einen oberen Auflagerand (19) des Geschirrteiles (10, 10a) aufsetzbar ist.

12. Mikrowellenherd-Geschirrteil nach Anspruch 11, dadurch gekennzeichnet, daß der obere Auflagerand (19) des Geschirrteiles (10, 10a) partiell mit einer zur Innenseite des Geschirrteiles (10, 10a) hin sich erweiternden Mulde (20) und der Deckel (18) mit einer Entlüftungsbohrung (21) versehen ist, die in eine Vertiefung (22) des Randsteges (13) einmündet.

13. Mikrowellenherd-Geschirrteil nach Anspruch 11, dadurch gekennzeichnet, daß der Auflagerand (19) des Geschirrteiles (10, 10a), außenseitig mit zwei gegeneinander versetzten Stufen (23, 24) und der Schließrand (25) des Dekels (18) mit entsprechenden Vorsprüngen (26, 27) versehen ist, wobei der Eingriff beider Vorsprünge (26, 27) in die Stufen (23, 24) einen luftdichten Abschluß des Geschirrteiles (10, 10a) und der Eingriff lediglich eines Vorsprunges (27) in eine Stufe (23) einen luftdurchlässigen Abschluß des Geschirrteiles (10, 10a) bewirkt.

14. Mikrowellenherd-Geschirrteil nach Anspruch 7 oder 11, dadurch gekennzeichnet, daß die Vertiefung (22) entlang des Randsteges (13) vollständig umläuft.

**Revendications**

1. Elément de vaisselle en matière plastique en forme de coque pour four à micro-ondes, ayant par exemple la forme d'un plat, d'un plateau repas, ou analogue, caractérisé par une structure en deux parties composée d'une coque intérieure (11) et d'une coque extérieure (12), les coques intérieure et extérieure (11, 12) sont chacune fabriquées d'une seule pièce et disposées à distance l'une de l'autre en laissant subsister un volume d'air et sont soudées ou collées ensemble dans la zone de nervures de bordure (13, 14) circulaires faisant saillie latéralement.

2. Elément de vaisselle pour four à microondes selon la revendication 1, caractérisé en ce que la coque intérieure (11) ou la coque extérieure (12) est pourvue, à l'intérieur de la zone délimitée par les nervures de bordure (13, 14) reliées ensemble, d'au moins un bossage d'appui (17) appuyant chaque fois sur l'autre coque et soudé ou collé à celle-ci.

3. Elément de vaisselle pour four à microondes selon la revendication 1 ou 2, caractérisé en ce que la coque intérieure (11) et la coque extérieure (12) se composent chaque fois de pièces d'emboutissage fabriquées d'une seule pièce.

4. Elément de vaisselle pour four à microondes selon une ou plusieurs des revendications 1 à 3, caractérisé en ce que la coque intérieure (11) est pourvue d'une ou de plusieurs nervures de séparation (28, 29) subdivisant l'espace intérieur de l'élément de vaisselle (10a) en différents compartiments (30, 31).

5. Elément de vaisselle pour four à microondes selon la revendication 4, caractérisé en ce que la coque extérieure (12) est pourvue, dans la zone des nervures de séparation (28, 29) de déformations (32) correspondantes.

6. Elément de vaisselle pour four à microondes selon une ou plusieurs des revendications 1 à 5, avec un couvercle (18), caractérisé en ce que le couvercle (18) est fabriqué d'une seule pièce en matière plastique et est applicable de manière étanche à l'air sur une bordure d'application supérieure (19) de l'élément de vaisselle (10, 10a).

7. Elément de vaisselle pour four à microondes selon la revendication 6, caractérisé en ce que la bordure d'application supérieure (19) de l'élément de vaisselle (10, 10a) est partiellement pourvue d'un enfoncement (20) s'étendant en direction de la face intérieure de l'élément de vaisselle (10, 10a) et le couvercle (18) étant pourvu d'un trou d'aération (21) qui débouche dans une cavité (22) de la nervure de bordure (13).

8. Elément de vaisselle pour four à microondes selon la revendication 6, caractérisé en ce que la bordure d'application (19) de l'élément de vaisselle (10, 10a) est pourvue sur la face extérieure de deux gradins (23, 24) décalés l'un par rapport à l'autre et de la bordure de fermeture (25), l'engagement des deux saillies (26, 27) dans les gradins (23, 24) provoquant une fermeture étanche à l'air de l'élément de vaisselle (10, 10a) et l'engagement d'une seule saillie (27) dans un gradin (23) provoquant une fermeture perméable à l'air de l'élément de vaisselle (10, 10a).

9. Elément de vaisselle pour four à microondes selon une ou plusieurs des revendications 1, 2 ou 4 à 8, caractérisé en ce que la coque intérieure (11) et la coque extérieure (12) se composent chaque fois de parties à parois minces moulées d'une seule pièce par injection.

10. Elément de vaisselle pour four à microondes selon une ou plusieurs des revendications précédentes, avec un couvercle (18), caractérisé en ce que le couvercle (18) présente une structure à deux coques, la coque intérieure et la coque extérieure étant disposées de manière espacée l'une par rapport à l'autre, avec un volume d'air, et étant soudées ou collées ensemble dans la zone des nervures de bordure circulaires et faisant saillie latéralement.

11. Elément de vaisselle pour four à microondes selon la revendication 10, caractérisé en ce que le couvercle est applicable de manière étanche à l'air sur une bordure d'application supérieure (19) de l'élément de vaisselle (10, 10a).

12. Elément de vaisselle pour four à microondes selon la revendication 11, caractérisé en ce que la bordure d'application supérieure (19) de l'élément de vaisselle (10, 10a) est partiellement pourvue d'un enfoncement (20) s'étendant en direction de la face intérieure de l'élément de vaisselle (10, 10a) et le couvercle (18) étant pourvu d'un trou d'aération (21) qui débouche dans une cavité (22) de la nervure de bordure (13).

13. Elément de vaisselle pour four à microondes selon la revendication 11, caractérisé en ce que la bordure d'application (19) de l'élément de vaisselle (10, 10a) est pourvue sur la face extérieure de deux gradins (23, 24) décalés l'un par rapport à l'autre et la bordure de fermeture (25) du couvercle (18) étant pourvue de saillies correspondantes (26, 27), l'engagement des deux saillies (26, 27) dans les gradins (23, 24) provoquant une fermeture étanche à l'air de l'élément de vaisselle (10, 10a) et l'engagement d'une seule saillie (27) dans un gradin (23) provoquant une fermeture perméable à l'air de l'élément de vaisselle (10, 10a).

14. Elément de vaisselle pour four à microondes selon la revendication 7 ou 11, caractérisé en ce que la cavité (22) fait tout le tour, le long de la nervure de bordure (13).

**Claims**

1. Microwave cooker dished crockery part made of synthetic material, for example in the shape of a bowl, a divided plate or the like, characterised by a two-part construction of an inner shell (11) and an outer shell (12), wherein the inner shell (11) and the outer shell (12) are each produced integrally, are arranged each at a spacing from the other with the inclusion of air and are welded or glued together in the region of encircling, laterally projecting rim webs (13, 14).

2. Microwave cooker crockery part according to claim 1, characterised thereby, that the inner shell (11) or the outer shell (12) are provided with at least one support dog (17), which lies against the respective other shell and is welded or glued together with this, in the region bounded by the rim webs (13, 14) that are connected together.

3. Microwave cooker crockery part according to claim 1 or 2, characterised thereby, that the inner shell (11) and the outer shell (12) each consist of integrally produced deep-drawn parts.

4. Microwave cooker crockery part according to one or more of the claims 1 to 3, characterised thereby, that the inner shell (11) is provided with one or more separating webs (28, 29) subdividing the interior space of the crockery part (10a) into different compartments (30, 31).

5. Microwave cooker crockery part, according to claim 4, characterised thereby, that the outer shell (12) is provided with corresponding recesses (32) in the region of the separating webs (28, 29).

6. Microwave cooker crockery part according to one or more of the claims 1 to 5 and with a lid (18), characterised thereby, that the lid (18) is made integrally of synthetic material and settable in air-tight manner onto an upper support rim (19) of the crockery part (10, 10a).

7. Microwave cooker crockery part according to claim 6, characterised thereby, that the upper support rim (19) of the crockery part (10, 10a) is partially provided with a trough (20) widening towards the inward side of the crockery part (10, 10a) and the lid (18) is provided with a ventilation bore (21), which opens into a depression (22) of the rim web (13).

8. Microwave cooker crockery part according to claim 6, characterised thereby, that the support rim (19) of the crockery part (10, 10a) is provided at the outside with two mutually displaced steps (23, 24) and the closing rim (26, 27), wherein the engagement of both projections (26, 27) into the steps (23, 24) effects an air-tight closure of the crockery part (10, 10a) and the engagement of merely one projection (27) into one step (23) effects an air-permeable closure of the crockery part (10, 10a).

9. Microwave cooker crockery part according to one or more of the claims 1, 2 or 4 to 8, characterised thereby, that the inner shell (11) and the outer shell (12) each consist integrally of thin-walled injection-moulded parts.

10. Microwave cooker crockery part according to one or more of the preceding claims with a lid (18), characterised thereby, that the lid (18) displays a double-shell build-up, wherein the inner shell and the outer shell are arranged each at a spacing from the other with the inclusion of air and are welded or glued together in the region of encircling, laterally projecting rim webs.

11. Microwave cooker crockery part according to claim 10, characterised thereby, that the lid is settable in air-tight manner on an upper support rim (19) of the crockery part (10, 10a).

12. Microwave cooker crockery part according to claim 11, characterised thereby, that the upper support rim (19) of the crockery part (10, 10a) is partially provided with a trough (20) widening towards the inward side of the crockery part (10, 10a) and the lid (18) is provided with a ventilation bore (21), which opens into a depression (22) of the rim web (13).

13. Microwave cooker crockery part according to claim 11, characterised thereby, that the support rim (19) of the crockery part (10, 10a) is provided at the outside with two mutually displaced steps (23, 24) and the closing rim (25) of the lid (18) is provided with corresponding projections (26, 27), wherein the engagement of both projections (26, 27) into the steps (23, 24) effects an air-tight closure of the crockery part (10, 10a) and the engagement of merely one projection (27) into one step (23) effects an air-permeable closure of the crockery part (10, 10a).

14. Microwave cooker crockery part according to claim 7 or 11, characterised thereby, that the depression (22) encircles completely along the rim web (13).

*Fig. 1*

Fig. 2

Fig. 3

EP 0 242 701 B1

Fig. 4

Fig. 5

Fig.6

Fig.7

Fig. 8

Fig. 9

Fig. 10

5